(19) Europäisches Patentamt
European Patent Office
Office européen des brevets

(11) EP 0 567 811 B1

(12) # EUROPÄISCHE PATENTSCHRIFT

(45) Veröffentlichungstag und Bekanntmachung des Hinweises auf die Patenterteilung:
**02.07.1997 Patentblatt 1997/27**

(51) Int Cl.[6]: **C08F 265/06**, C08F 265/04

(21) Anmeldenummer: **93105646.9**

(22) Anmeldetag: **06.04.1993**

(54) **Verfahren zur Herstellung einer wässrigen Polymerisatdisperion**

Process for producing an aqueous polymer dispersion

Procédé de préparation d'une dispersion aqueuse de polymères

(84) Benannte Vertragsstaaten:
**BE DE ES FR GB IT NL SE**

(30) Priorität: **29.04.1992 DE 4213965**

(43) Veröffentlichungstag der Anmeldung:
**03.11.1993 Patentblatt 1993/44**

(73) Patentinhaber: **BASF Aktiengesellschaft**
**67063 Ludwigshafen (DE)**

(72) Erfinder:
- **Aydin, Oral, Dr.**
  **W-6800 Mannheim 1 (DE)**
- **Portugall, Michael, Dr.**
  **W-6706 Wachenheim (DE)**
- **Neutzner, Josef, Dr.**
  **W-6730 Neustadt (DE)**
- **Maechtle, Walter, Dr.**
  **W-6700 Ludwigshafen (DE)**

(56) Entgegenhaltungen:
**EP-A- 0 387 855**
**FR-A- 1 474 564**
**US-A- 3 424 706**
**US-A- 3 689 447**
**US-A- 4 130 523**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 567 811 B1

## Beschreibung

Die vorliegende Erfindung betrifft ein Verfahren zur Herstellung wäßriger Polymerisatenddispersionen, die eine Feststoffvolumenkonzentration von (Feststoffvolumen = Feststoffmasse dividiert durch Feststoffdichte) wenigstens 50 Vol.-% aufweisen, das dadurch gekennzeichnet ist, daß man wenigstens ein radikalisch polymerisierbares Monomeres unter Zusatz wenigstens einer wäßrigen Dispersion eines Ausgangspolymerisats in einem Polymerisationsgefäß nach dem Verfahren der radikalischen wäßrigen Emulsionspolymerisation in Gegenwart grenzflächenaktiver Substanzen und radikalischer Polymerisationsinitiatoren mit der Maßgabe polymerisiert, daß

a) die Masse des wenigstens einen radikalisch polymerisierbaren Monomeren, bezogen auf die Gesamtmasse, gebildet aus der Masse des wenigstens einen radikalisch polymerisierbaren Monomeren und der in Form der wenigstens einen wäßrigen Dispersion zugesetzten Masse an Ausgangspolymerisat, 90 bis 99,5 % beträgt,

b) das Ausgangspolymerisat in der wenigstens einen wäßrigen Dispersion in Form dispers verteilter Ausgangspolymerisatteilchen vorliegt, deren von Null verschiedener gewichtsmittlerer Teilchendurchmesser kleiner oder gleich 50 nm ist,

c) die Anzahl, der in Form der wenigstens einen wäßrigen Dispersion eines Ausgangspolymerisats insgesamt zugesetzten, in der wenig) stens einen wäßrigen Dispersion dispers verteilt vorliegenden Ausgangspolymerisatteilchen, bezogen auf das Volumen der Polymerisatenddispersion, $10^{15}$ bis $10^{20}$ Ausgangspolymerisatteilchen pro Liter beträgt,

d) von der Gesamtmenge des wenigstens einen zu polymerisierenden Monomeren vor Beginn der radikalischen wäßrigen Emulsionspolymerisation entweder nichts oder höchstens bis zu 10 Gew.-% der Gesamtmenge ins Polymersationsgefäß vorgelegt werden,

e) von der Gesamtmenge der wenigstens einen zuzusetzenden wäßrigen Dispersion eines Ausgangspolymerisats vor Beginn der radikalischen wäßrigen Emulsionspolymerisation entweder nichts oder höchstens soviel ins Polymerisationsgefäß vorgelegt wird, daß die Gesamtzahl der vorgelegten Ausgangspolymerisatteilchen nicht mehr als 10 % der insgesamt in Form der wenigstens einen wäßrigen Dispersion zuzusetzenden Ausgangspolymerisatteilchen beträgt,

f) von der Gesamtmenge des wenigstens einen zu polymerisierenden Monomeren wenigstens 90 Gew.-% dem Polymerisationsgefäß nach Beginn der radikalischen wäßrigen Emulsionspolymerisation zugeführt werden, und zwar so, daß zu jedem Zeitpunkt dieser Zufuhr der Polymerisationsumsatz der bereits zuvor dem Polymerisationsgefäß zugeführten Monomeren einschließlich der ins Polymerisationsgefäß vorgelegten Monomeren, bezogen auf die Gesamtmenge gebildet aus den zuvor dem Polymerisationsgefäß zugeführten Monomeren und den ins Polymerisationsgefäß vorgelegten Monomeren, wenigstens 80 % beträgt,

g) von der Gesamtmenge der wenigstens einen zuzusetzenden wäßrigen Dispersion eines Ausgangspolymerisats dem Polymerisationsgefäß nach Beginn der radikalischen wäßrigen Emulsicnspolymerisation wenigstens soviel zugeführt wird, daß die Gesamtzahl der in dieser zugeführten Menge der wenigstens einen zuzusetzenden wäßrigen Dispersion enthaltenen Ausgangspolymerisatteilchen wenigstens 90 % der insgesamt in Form der wenigstens einen wäßrigen Dispersion eines Ausgangspolymerisats zuzusetzenden Ausgangspolymerisatteilchen beträgt und daß diese Zufuhr so erfolgt, daß

- zu jedem Zeitpunkt dieser Zufuhr der Polymerisationsumsatz der bereits zuvor dem Polymerisationsgefäß zugeführten Monomeren einschließlich der ins Polymerisationsgefäß vorgelegten Monomeren, bezogen auf die Gesamtmenge gebildet aus den zuvor dem Polymerisationsgefäß zugeführten Monomeren und den ins Poly-merisationsgefäß vorgelegten Monomeren, wenigstens 80 % beträgt;

- zu jedem Zeitpunkt nach Beginn der Emulsionspolymerisation das Verhältnis $V_e$ der Molzahl der dem Polymerisationsgefäß bereits zuvor zugeführten Menge des wenigstens einen Monomeren einschließlich des ins Polymerisationsgefäß vorgelegten Anteils des wenigstens einen Monomeren zu der Molzahl der dem Polymerisationsgefäß bereits zuvor in Form der wenigstens einen wäßrigen Dispersion eines Ausgangspolymerisats zugeführten Ausgangspolymerisatteilchen einschließlich des ins Polymerisationsgefäß vorgelegten Anteils der wenigstens einen wäßrigen Dispersion eines Ausgangspolymerisats, normiert auf das Verhältnis der Molzahl der insgesamt zu polymerisierenden Menge des wenigstens einen Monomeren zu der Molzahl der

insgesamt in Form der wenigstens einen wäßrigen Dispersion eines Ausgangspolymerisats zuzusetzenden Ausgangspolymerisatteilchen, im Bereich von > 0 bis 10 liegt;

- zu jedem Zeitpunkt nach Beginn der Emulsionspolymerisation das Verhältnis $V_a$ der Molzahl der dem Polymerisationsgefäß bereits zuvor in Form der wenigstens einen wäßrigen Dispersion eines Ausgangspolymerisats zugeführten Ausgangspolymerisatteilchen ausschließlich des ins Polymerisationsgefäß vorgelegten Anteils der wenigstens einen wäßrigen Dispersion eines Ausgangspolymerisats zu der Molzahl der dem Polymerisationsgefäß bereits zuvor zugeführten Menge des wenigstens einen Monomeren ausschließlich des ins Polymerisationsgefäß vorgelegten Anteils des wenigstens einen Monomeren, normiert auf das Verhältnis der Molzahl der insgesamt in Form der wenigstens einen wäßrigen Dispersion eines Ausgangspolymerisats nach Beginn der wäßrigen Emulsionspolymerisation zuzuführenden Ausgangspolymerisatteilchen zu der Molzahl der insgesamt nach Beginn der wäßrigen Emulsionspolymerisation zuzuführenden Menge des wenigstens einen Monomeren, im Bereich von 0 bis 10 liegt;

- nach Beendigung der Zufuhr des wenigstens einen Monomeren noch höchstens 10 % der insgesamt in Form der wenigstens einen wäßrigen Dispersion eines Ausgangspolymerisats zuzusetzenden Ausgangspolymerisatteilchen dem Polymerisationsgefäß zugeführt werden;

- nach Beendigung der Zufuhr der wenigstens einen wäßrigen Dispersion eines Ausgangspolymerisats noch höchstens 30 Gew.-% der Gesamtmenge des wenigstens einen zu polymerisierenden Monomeren dem Polymerisationsgefäß zugeführt werden;

h) die wäßrige Polymerisatenddispersion, bezogen auf die Gesamtmasse gebildet aus der Masse des wenigstens einen radikalisch polymerisierbaren Monomeren und der in Form der wenigstens einen wäßrigen Dispersion zuzusetzenden Masse an Ausgangspolymerisat, 1 bis 5 % grenzflächenaktive Substanzen enthält,

i) von der Gesamtmenge der insgesamt in der Polymerisatenddispersion enthaltenen Menge an grenzflächenaktiven Substanzen vor Beginn der radikalischen wäßrigen Emulsionspolymerisation höchstens 15 Gew.-% ins Polymerisationsgefäß vorgelegt werden (Teilmenge A),

j) von der Gesamtmenge der insgesamt in der Polymerisatenddispersion enthaltenen Menge an grenzflächenaktiven Substanzen wenigstens 50 Gew.-% bereits Bestandteil der wenigstens einen zuzusetzenden wäßrigen Dispersion eines Ausgangspolymerisats sind (Teilmenge B),

k) der Anteil der Gesamtmenge der insgesamt in der Polymerisatenddispersion enthaltenen Menge an grenzflächenaktiven Substanzen, der weder Bestandteil der Teilmenge A noch Bestandteil der Teilmenge B ist (die Teilmenge C), nach Beginn der radikalischen wäßrigen Emulsionspolymerisation dem Polymerisationsgefäß so zugeführt wird, daß zu jedem Zeitpunkt die Gesamtmenge, gebildet aus den bereits im Polymerisationsgefäß befindlichen Anteilen der Teilmengen C und B, bezogen auf die im Polymerisationsgefäß befindliche Gesamtmenge an Monomeren und Polymerisat weniger als 5 Gew.-% beträgt und

l) die insgesamt eingesetzte Menge an radikalischen Polymerisationsinitiatoren, bezogen auf die Gesamtmenge des wenigstens einen zu polymerisierenden Monomeren, 0,1 bis 5 Gew.-% beträgt und im Verlauf der radikalischen wäßrigen Emulsionspolymerisation dem Polymerisationsgefäß so zugegeben wird, daß sich die radikalische wäßrige Emulsionspolymerisation bis zu einem Mindestpolymerisationsumsatz der Gesamtmenge des wenigstens einen zu polymerisierenden Monomeren von wenigstens 90 % fortsetzt.

Wäßrige Polymerisatdispersionen sind Systeme, die als disperse Phase in einem wäßrigen Dispersionsmedium dispers verteilte Polymerisatteilchen enthalten.

Ebenso wie Polymerisatlösungen beim Verdampfen des Lösungsmittels, weisen wäßrige Polymerisatdispersionen beim Verdampfen des wäßrigen Dispersionsmediums die Eigenschaft auf, Polymerisatfilme zu bilden, weshalb wäßrige Polymerisatdispersionen in vielfacher Weise als Bindemittel, z.B. für Anstrichfarben oder für Massen zum Beschichten von Leder, Anwendung finden.

Wäßrige Polymerisatdispersionen mit hohem Polymerisatanteil sind insofern von besonderem Vorteil, als einerseits ihr relativ geringerer Anteil an wäßrigem Dispersionsmedium den Aufwand für das Verdampfen desselben, z.B. zur Filmbildung oder zur Herstellung von Polymerpulvern, reduziert und andererseits der Wertstoff Polymerisat in Anwendung einer relativ geringeren Menge wäßriger Phase als Trägermedium gelagert und transportiert werden kann.

Von Nachteil ist jedoch, daß mit zunehmender Volumenkonzentration (US-A-4,130,523) des Polymerisats die Herstellung wäßriger Polymerisatdispersionen problembehaftet ist. So nimmt einerseits der Fließwiderstand (die Viskosität) zu und erschwert sowohl die Abführung der Reaktionswärme als auch die Verarbeitung der wäßrigen Dispersion und andererseits wächst die Neigung der dispergierten Polymerisatteilchen sich aus Gründen der thermodynamischen Stabilität zusammenzulagern. Die dabei entstehenden Ausflockungen [a) Mikroflockungen oder Stippen; sie können durch herkömmliche Filtration in der Regel nicht abgetrennt werden; b) Makroflockungen oder Koagulat; ist normalerweise durch übliche Filtration abtrennbar;] führen insbesondere zu Störungen in den Verfilmungen der wäßrigen Polymerisatdispersionen und sind daher in der Regel unerwünscht.

Nach Untersuchungen über den Fließwiderstand wäßriger Polymerisatdispersionen weisen solche mit einer breiten Größenverteilung (polydispers) der dispergierten Polymerisatteilchen bei gleichem Feststoffgehalt in der Regel einen geringeren Fließwiderstand auf als solche mit einer engen Größenverteilung (im Grenzfall monodispers). Ferner zeigen grobteilige wäßrige Polymerisatdispersionen unter der Prämisse gleichen Feststoffgehalts einen geringeren Fließwiderstand als feinteilige wäßrige Polymerisatdispersionen.

Aus der EP-A 129 699 ist ein Verfahren zur Herstellung einer wäßrigen Polymerisatdispersion bekannt, bei dem man in einem Polymerisationsgefäß nach dem Verfahren der radikalischen wäßrigen Emulsionspolymerisation ungesättigte Monomere in an sich bekannter Weise polymerisiert und dabei eine wäßrige Dispersion eines Ausgangspolymerisats zusetzt, wobei der Zusatz der wäßrigen Dispersion des Ausgangspolymerisats abgeschlossen sein muß, bevor 40 Gew.-% der insgesamt zu polymerisierenden Monomeren einpolymerisiert sind sowie frühestens dann erfolgen darf, wenn die mittlere Teilchengröße des bei der Polymerisation der Monomeren entstehenden Emulsionspolymerisats den zweifachen Wert der mittleren Teilchengröße der wäßrigen Dispersion des Ausgangspolymerisats aufweist. Vorzugsweise wird dabei die wäßrige Dispersion des Ausgangspolymerisats nicht über einen längeren Zeitraum, sondern auf einmal zugegeben.

Nachteilig an den so erhältlichen wäßrigen Polymerisatdispersionen ist, daß ihr Fließwiderstand oberhalb einer Feststoffvolumenkonzentration von 50 Vol.-% nicht voll zu befriedigen vermag und gemäß den Ausführungsbeispielen die Feststoffvolumenkonzentration auf Werte unter 65 Vol.-% beschränkt ist.

Die US-A 4,130,523 betrifft ein Verfahren zur Herstellung wäßriger Polymerisatdispersionen, bei dem während des Polymerisationsprozesses laufend bereits gebildete wäßrige Polymerisatdispersion aus der Reaktionszone entfernt, gelagert und später der Reaktionszone als eine Art Ausgangspolymerisatdispersion wieder zugeführt wird. Nachteilig an diesem Verfahren ist, daß es für eine großtechnische Realisierung ungeeignet ist.

Die US-A 3,424,706 bezieht sich auf ein Verfahren zur Herstellung wäßriger Polymerisatdisperionen, deren Polymerisate wenigstens 70 bis 97 Gew.-% Vinylidenchlorid einpolymerisiert enthalten, bei dem die Polymerisation der Monomeren unter Zusatz einer wäßrigen Dispersion eines Ausgangspolymerisats erfolgt. Unter anderem enthält die US-A 3,424,706 den Hinweis, die zu polymerisierenden Monomeren und die wäßrige Dispersion des Ausgangspolymerisats miteinander zu vermischen und dieses Gemisch der einen Teil des Polymerisationsansatzes umfassenden Vorlage zuzuführen.

Nachteilig am Verfahren der US-A 3,424,706 ist, daß es auf Monomerengemische beschränkt ist, die hauptsächlich Vinylidenchlorid enthalten. Darüber hinaus vermag gemäß den Ausführungsbeispielen auch bei den nach diesem Verfahren erhältlichen wäßrigen Polymerisatdispersionen sowohl der Fließwiderstand oberhalb einer Feststoffvolumenkonzentration von 50 Vol.-%, als auch die in noch befriedigend fließfähigem Zustand erreichbare Obergrenze der Feststoffvolumenkonzentration nicht zu befriedigen.

Ziel der vorliegenden Erfindung war daher, ein neues Verfahren zur Herstellung wäßriger Polymerisatdispersionen zur Verfügung zu stellen, mit dem diese in einfacher, großtechnisch geeigneter, reproduzierbarer und nicht auf spezielle Monomere beschränkter Weise bei erhöhter Feststoffvolumenkonzentration mit reduziertem Fließwiderstand sowie reduziertem Gehalt an Ausflockungen erhältlich sind.

Demgemäß wurde das eingangs definierte Verfahren zur Herstellung einer wäßrigen Polymerisatenddispersion gefunden.

Bemerkenswerterweise ist der erfindungsgemäße Gegenstand nicht auf die radikalische wäßrige Emulsionspolymerisation von hauptsächlich oder ausschließlich aus Vinyl- und/oder Vinylidenhalogeniden zusammengesetzten Monomerengemischen beschränkt, ist doch allgemein bekannt, daß die Entwicklung der dispersen Phase im Fall von von Vinyl- und/oder Vinylidenhalogeniden verschiedenen Monomeren ein wesentlich komplexeres Erscheinigungsbild aufweist.

Für das erfindungsgemäße Verfahren kommen daher unter anderen insbesondere monoethylenisch ungesättigte Monomere wie Olefine, z.B. Ethylen, vinylaromatische Monomere wie Styrol, $\alpha$-Methylstyrol, o-Chlorstyrol oder Vinyltoluole, Vinyl- und Vinylidenhalogenide wie Vinyl- und Vinylidenchlorid, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methyacrylsäuremethyl-, -ethyl, -n-butyl, -iso-butyl und -2-ethylhexylester, Maleinsäuredimethylester oder Maleinsäure-n-butylester, Nitrile α,β-monoethylenisch ungesättigter Carbonsäuren wie Acrylnitril sowie $C_{4-8}$-konjugierte Diene wie 1,3-Butadien und Isopren in Betracht. Die genannten Monomeren bilden in der Regel die Hauptmonomeren, die bezogen auf die Gesamtmenge der nach dem Verfahren der radikalischen wäßrigen Emulsionspolymerisation zu polymerisierenden Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere, die üblicherweise die innere Festigkeit der Verfilmungen der wäßrigen Polymerisatenddispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate- und dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. Neben ungesättigte Doppelbindungen aufweisenden Monomeren können in untergeordneten Mengen, üblicherweise 0,01 bis 2 Gew.-% bezogen auf die zu polymerisierenden Monomeren, das Molekulargewicht regelnde Substanzen wie tert.-Dodecylmercaptan miteinpolymerisiert werden. Vorzugsweise werden derartige Substanzen im Gemisch mit den zu polymerisierenden Monomeren der Polymerisationszone zugegeben.

Als grenzflächenaktive Substanzen kommen sowohl die zur Durchführung von radikalischen wäßrigen Emulsionspolymerisationen üblicherweise eingesetzten Schutzkolloide als auch Emulgatoren in Betracht. Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 50, Alkylrest: $C_4$ bis $C_9$), ethoxylierte Fettalkohole (EO-Grad: 3 bis 50, Alkylrest: $C_8$ bis $C_{36}$), sowie Alkali- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208.

Als besonders geeignete grenzflächenaktive Substanzen haben sich Verbindungen der allgemeinen Formel I

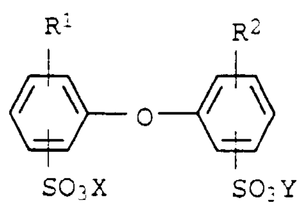

(I),

worin $R^1$ und $R^2$ Wasserstoff oder $C_4$- bis $C_{24}$-Alkyl bedeuten und nicht gleichzeitig Wasserstoff sind, und X und Y Alkalimetallionen und/oder Ammoniumionen sein können, erwiesen. In der Formel I bedeuten $R^1$ und $R^2$ bevorzugt lineare oder verzweigte Alkylreste mit 6 bis 18 C-Atomen oder Wasserstoff, und insbesondere mit 6,12 und 16 C-Atomen, wobei $R^1$ und $R^2$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen I in denen X und Y Natrium, $R^1$ ein verzweigter Alkylrest mit 12 C-Atomen und $R^2$ Wasserstoff oder $R^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Vorzugsweise werden die Verbindungen I im erfindungsgemäßen Verfahren für sich als grenzflächenaktive Substanzen eingesetzt. Die Verbindungen I sind allgemein bekannt, z.B. aus der US-A 4,269,749, und im Handel erhältlich. Mit Vorteil enthält die erfindungsgemäße wäßrige Polymerisatenddispersion, bezogen auf die Masse des Endpolymerisats, 1 bis 3 Gew.-% an grenzflächenaktiven Substanzen.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxidisulfate, als auch um Azoverbindungen handeln. Vorzugsweise werden kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure, und ganz besonders bevorzugt kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, eingesetzt, wobei anstelle von Ascorbinsäure auch häufig das Natriummetallsalz der Hydroxymethansulfinsäure, Natriumsulfit, Natriumhydrogensulfit oder Natriummetalldisulfit und anstelle von Wasserstoffperoxid tert. Butylhydroperoxid oder Alkalimetallperoxidisulfate und/oder Ammoniumperoxidisulfat angewendet werden. Anstelle eines wasserlöslichen Eisen(II)-salzes wird häufig eine Kombination aus wasserlöslichen Fe/V-Salzen benutzt. Vorzugsweise beträgt die Menge der eingesetzten radikalischen Initiatorsysteme, bezogen auf die Gesamtmenge der zu polymerisierenden Monomeren, 0,1 bis 2 Gew.-%.

Die Art und Weise, in der das radikalische Initiatorsystem im Verlauf der erfindungsgemäßen radikalischen wäßrigen Emulsionspolymerisation dem Polymerisationsgefäß zugegeben wird, ist hinsichtlich des Erfolgs des erfindungsgemäßen Verfahrens eher von untergeordneter Bedeutung. Das Initiatorsystem kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise zugesetzt werden. Im einzelnen hängt dies in an sich dem Durchschnittsfachmann bekannter Weise sowohl von der chemischen Natur des Initiatorsystems als auch von der Polymerisationstemperatur ab.

Polymerisationsdruck und Polymerisationstemperatur sind gleichfalls von eher untergeordneter Bedeutung. Im allgemeinen arbeitet man bei Temperaturen zwischen Raumtemperatur und 100°C, vorzugsweise bei Temperaturen von 50 bis 95°C. Die Anwendung von erhöhtem oder vermindertem Druck ist möglich, so daß die Polymerisationstemperatur auch 100°C überschreiten und bis zu 130°C betragen kann. Vorzugsweise werden leichtflüchtige Monomere wie Ethylen, Butadien oder Vinylchlorid unter erhöhtem Druck polymerisiert.

Die für die erfindungsgemäße radikalische wäßrige Emulsionspolymerisation beispielhaft als geeignet genannten Monomeren eignen sich nicht nur als Konstituenten des zu polymerisierenden Monomerengemisches. Vielmehr eignen sie sich in gleicher Weise wie die für die erfindungsgemäße radikalische wäßrige Emulsionspolymerisation empfohlenen radikalischen Polymerisationsinitiatoren und das Molekulargewicht regelnden Verbindungen auch als Konstituenten des Ausgangspolymerisats, wobei die Monomeren-, Regler- und Initiatorzusammensetzung für die wäßrige Dispersion des Ausgangspolymerisats mit derjenigen für das erfindungsgemäß zu polymerisierende Monomerengemisch sowohl deckungsgleich als auch verschieden sein kann. Die ebenda gemachten Aussagen gelten im übertragenen Sinn notwendigerweise auch für die zur Herstellung der wäßrigen Dispersion des Ausgangspolymerisats einzusetzenden grenzflächenaktiven Substanzen, müssen doch bei dem erfindungsgemäßen Verfahren wenigstens 50, vorzugsweise wenigstens 60 Gew.-% der Gesamtmenge der insgesamt in der erfindungsgemäßen Polymerisatenddispersion enthaltenen Menge an grenzflächenaktiven Substanzen bereits Bestandteil der zuzusetzenden wäßrigen Dispersion des Ausgangspolymerisats sein. Diese Menge an grenzflächenaktiven Substanzen muß selbstverständlich nicht vollständig bereits bei der radikalischen wäßrigen Emulsionspolymerisation zur Herstellung der wäßrigen Dispersion des Ausgangspolymerisats eingesetzt worden sein. Sie kann vielmehr teilweise auch nachträglich zur bereits auspolymerisierten wäßrigen Dispersion des Ausgangspolymerisats zugegeben werden.

Erfindungsgemäß zuzusetzende wäßrige Dispersionen eines Ausgangspolymerisats, in denen das Ausgangspolymerisat in Form dispers verteilter Ausgangspolymerisatteilchen mit einem von Null verschiedenen gewichtsmittleren Teilchendurchmesser kleiner oder gleich 50 nm, vorzugsweise 10 bis 40, besonders bevorzugt 25 bis 35 nm, vorliegt, sind in an sich bekannter Weise erhältlich. Entsprechende Lehren sind z.B. in Houben-Weyl, Methoden der Organischen Chemie, Band E 20, Teil I, Makromolekulare Stoffe, Georg-Thieme-Verlag, Stuttgart, 1987, Seiten 248 bis 268 zu finden. Bei einem Feststoffgehalt von üblicherweise 20 bis 40 Gew.-%, sind die Ausgangsdispersionen in besonders einfacher Weise z.B. dadurch erhältlich, daß man die wäßrige Phase (die z.B. Ammoniak oder $NaHCO_3$ zur pH-Re-

gulierung enthalten kann), die Monomeren, die radikalischen Initiatoren (normalerweise 0,1 bis 5 Gew.-% bezogen auf die Menge der zu polymerisierenden Ausgangsmonomeren) und grenzflächenaktiven Substanzen (üblicherweise 10 bis 50 Gew.-% bezogen auf die zu polymerisierenden Ausgangsmonomeren) bei niederer Temperatur miteinander vermischt und nach Vermischen auf die Polymerisationstemperatur erwärmt und polymerisiert (mit zunehmender Menge an grenzflächenaktiver Substanz nimmt die Teilchengröße in der Regel ab). Hinsichtlich Polymerisationstemperatur und Druck gelten die hinsichtlich des erfindungsgemäßen Verfahrens gemachten Aussagen. Selbstverständlich kann ein Teil der erfindungsgemäß zuzusetzenden wäßrigen Dispersion eines Ausgangspolymerisats unmittelbar vor Beginn des eigentlichen erfindungsgemäßen Verfahrens im selben Polymerisationsgefäß fertiggestellt werden. Beide Emulsionspolymerisationsverfahren können dabei nahtlos ineinander übergehen, insbesondere dann, wenn zur Herstellung dieses dann sozusagen vorgelegten Teils der wäßrigen Dispersion des Ausgangspolymerisats das Zulaufverfahren angewendet wird, bei dem man einen Teil des Polymerisationsansatzes vorlegt, auf die Polymerisationstemperatur erhitzt und unter Aufrechterhaltung der Polymerisation anschließend den Rest in gegebenenfalls räumlich getrennten Zuläufen zuführt.

Die in der wäßrigen Dispersion des Ausgangspolymerisats enthaltene Anzahl dispers verteilter Ausgangspolymerisatteilchen ist in guter Näherung in einfacher Weise dadurch erhältlich, daß man Kugelform der Teilchen annimmt, nach einem an sich bekannten Verfahren (z.B. Photonenkorrelationsspektroskopie mittels dynamischer Lichtstreuung oder analytische Ultrazentrifuge; letztere eignet sich insbesondere auch zur Bestimmung der gewichtsmittleren Teilchendurchmesser und wurde hier angewendet; vgl. W. Mächtle, Makromolekulare Chemie 185 (1984) 1025-1039) den zahlenmittleren Teilchenradius bestimmt und anschließend den Polymerisatgehalt der wäßrigen Dispersion des Ausgangspolymerisats (ermittelt durch Trocknen und Wägen, abzüglich der eingesetzten Emulgatormenge) mit Drei multipliziert und das dabei erhaltene Produkt durch das aus der vierfachen Dichte des Ausgangspolymerisats, dem Verhältnis von Kreisumfang zu Kreisdurchmesser und der dritten Potenz des zahlenmittleren Teilchenradius gebildete Produkt dividiert. Vorzugsweise wird das erfindungsgemäße Verfahren so gestaltet, daß die Anzahl der in Form von wenigstens einer wäßrigen Dispersion eines Ausgangspolymerisats im Verlauf des Verfahrens insgesamt zugesetzten Ausgangspolymerisatteilchen, bezogen auf das Volumen der Polymerisatenddisperison, $10^{17}$ bis $10^{19}$ Ausgangspolymerisatteilchen pro Liter beträgt. Ferner sind wäßrige Dispersionen von Ausgangspolymerisaten bevorzugt, die eine breite Teilchenverteilung aufweisen. Selbstverständlich kann sich im Verlauf der erfindungsgemäßen wäßrigen radikalischen Emulsionspolymerisation sowohl die Zusammensetzung der nach deren Beginn dem Polymerisationsgefäß zuzuführenden Monomeren, als auch die Zusammensetzung der nach deren Beginn dem Polymerisationsgefäß zuzuführenden wäßrigen Dispersion eines Ausgangspolymerisats ändern. Ferner kann die Zufuhr sowohl stufenförmig als auch kontinuierlich oder nach der Gradientenfahrweise erfolgen. In der Regel wird eine kontinuierliche Zufuhr bevorzugt.

Auf die Weise sind besondere Strukturen der Teilchen des Endpolymerisats erhältlich, wie sie z.B. in Kast, Makromol. Chem. Suppl. 10/11, 447-461 (1985) beschrieben sind. Bevorzugte Klassen von Endpolymerisaten sind solche, die

- zu 70 bis 100 Gew.-% aus Estern der Acryl- und/oder Methacrylsäure mit 1 bis 12 C-Atome aufweisenden Alkanolen und/oder Styrol

oder

- zu 70 bis 100 Gew.-% aus Styrol und/oder Butadien

oder

- zu 70 bis 100 Gew.-% aus Vinylchlorid und/oder Vinylidenchlorid

aufgebaut sind, wobei die Klasse der Acrylate besonders bevorzugt ist und vorzugsweise nachfolgende Monomerenzusammensetzungen umfaßt:

| | |
|---|---|
| 95 bis 99 | Gew.-% wenigstens eines Esters der Acryl- und/oder Methacrylsäure mit 1 bis 8 C-Atome aufweisenden Alkanolen und |
| 1 bis 5 | Gew.-% Acrylsäure, Methacrylsäure oder deren Gemisch. |

Vorzugsweise wird das erfindungsgemäße Verfahren so durchgeführt, daß man einen Teil des Polymerisationsansatzes in das Polymerisationsgefäß vorlegt, der, von einem eventuellen Gehalt an Polymerisationsinitiatoren abgesehen, in vorteilhafter Weise lediglich Wasser und grenzflächenaktive Substanzen, und in besonders vorteilhafter Weise darüber hinaus einen Teil der insgesamt im Verlauf des Verfahrens zuzusetzenden wenigstens einen wäßrigen Dispersion eines Ausgangspolymerisats umfaßt, wobei erfindungsgemäß die so insgesamt vorgelegte Menge an grenzflächenaktiven Substanz, bezogen auf die Gesamtmenge der insgesamt in der Polymerisatenddisperison enthaltenen grenzflächenaktiven Substanzen, höchstens 15 Gew.-% beträgt (d.h. die in der eingangs gegebenen Definition der erfindungsgemäßen wäßrigen Polymerisatenddispersionen in den Absätzen i) bis k) auftretenden Teilmengen A und B können eine gemeinsame Schnittmenge aufweisen). Anschließend wird die Vorlage auf die Polymerisationstemperatur erwärmt und unter Aufrechterhaltung der Polymerisation der Rest des Polymerisationsansatzes zugeführt. Bei an Initiator und Monomeren freier Vorlage kann die Poly- ½ merisation z.B. dadurch gestartet werden, daß man in die auf Polymerisationstemperatur erhitzte Vorlage Monomere und Initiator zeitgleich beginnend zuführt. Zweckmäßigerweise werden die radikalischen Polymerisationsinitiatoren über einen räumlich getrennten Zulauf zugeführt, wobei ihre Zufuhr in vorteilhafter Weise im wesentlichen synchron zur Zufuhr der zu polymerisierenden Monomeren erfolgt. Die zu polymerisierenden Monomeren können sowohl für sich, als auch in wäßriger Phase voremulgiert zugeführt werden. Werden wäßrige Polymerisatenddispersionen mit besonders hoher Feststoffvolumenkonzentration angestrebt, erfolgt die Zufuhr der zu polymerisierenden Monomeren vorzugsweise für sich.

Die nach Beginn der erfindungsgemäßen radikalischen wäßrigen Emulsionspolymerisation erfolgende Zufuhr an zu polymerisierenden Monomeren und an der wenigstens einen wäßrigen Dispersion eines Ausgangspolymerisats erfolgt mit Vorteil so, daß zu jedem Zeitpunkt dieser Zufuhr der Polymerisationsumsatz (in dieser Schrift, wie an sich üblich, stets auf molare Mengen bezogen) der bereits zuvor dem Polymerisationsgefäß zugeführten Monomeren, einschließlich der gegebenenfalls ins Polymerisationsgefäß vorgelegten Monomeren, bezogen auf die Gesamtmenge, gebildet aus den zuvor dem Polymerisationsgefäß zugeführten Monomeren und den gegebenenfalls ins Polymerisationsgefäß vorgelegten Monomeren, wenigstens 90, mit besonderem Vorteil wenigstens 95 % beträgt. Vorzugsweise endet die Zufuhr der wenigstens einen wäßrigen Dispersion eines Ausgangspolymerisats spätestens zeitgleich mit der Zufuhr der zu polymerisierenden Monomeren, wobei nach Beendigung der Zufuhr der wenigstens einen wäßrigen Dispersion eines Ausgangspolymerisats mit besonderem Vorteil noch bis zu 20 Gew.-% der Gesamtmenge des wenigstens einen zu polymerisierenden Monomeren dem Polymerisationsgefäß zugeführt werden.

Werden nach Beginn der erfindungsgemäßen radikalischen wäßrigen Emulsionspolymerisation auch nicht Bestandteil der wenigstens einen wäßrigen Dispersion eines Ausgangspolymerisats seiende grenzflächenaktive Substanzen dem Polymerisationsgefäß zugeführt, so erfolgt diese Zufuhr mit Vorteil so, daß zu jedem Zeitpunkt die Gesamtmenge, gebildet aus den bereits im Polymerisationsgefäß befindlichen Teilmengen C und B der insgesamt einzusetzenden grenzflächenaktiven Substanzen, bezogen auf die im Polymerisationsgefäß befindliche Gesamtmenge an Monomeren und Polymerisat, weniger als 3 Gew.-% beträgt. Vorzugsweise erfolgt die Zufuhr synchron zur Monomerenzufuhr. Im Extremfall können bis zu 50 Gew.-% der insgesamt in der wäßrigen Polymerisatenddispersion enthaltenen Menge an grenzflächenaktiven Substanzen nach Beendigung des eigentlichen Polymerisationsvorganges zur nachträglichen Stabilisierung der wäßrigen Polymerisatenddispersion zugesetzt werden. Vorzugsweise werden dem Polymerisationsgefäß nach Beginn der erfindungsgemäßen radikalischen wäßrigen Emulsionspolymerisation keine nicht Bestandteil der wenigstens einen wäßrigen Dispersion eines Ausgangspolymerisats seiende grenzflächenaktive Substanzen zugeführt.

Nach Beginn der erfindungsgemäßen wäßrigen Emulsionspolymerisation erfolgt die Zufuhr der wenigstens einen wäßrigen Dispersion eines Ausgangspolymerisats und der zu polymerisierenden Monomeren relativ zueinander in vorteilhafter Weise so, daß das in der eingangs gegebenen Definition der erfindungsgemäßen Polymerisatenddispersion gemäß Absatz g) normierte Verhältnis $V_e$ zu jedem Zeitpunkt im Bereich > 0 bis 6, und das gemäß desselben Absatzes g) normierte Verhältnis $V_a$ im Bereich von 0 bis 7 liegt. Ferner wird die nach Beginn der erfindungsgemäßen radikalischen wäßrigen Emulsionspolymerisation erfolgende Zufuhr an Ausgangspolymerisatteilchen und Monomeren vorzugsweise kontinuierlich vorgenommen.

Nach Beendigung des eigentlichen Polymerisationsverfahrens wird vorzugsweise noch einige Stunden unter Aufrechterhaltung der Polymerisationstemperatur nachgerührt. Daran können sich übliche Maßnahmen zur Restmonomerenentfernung, zur Einstellung eines anderen pH-Wertes oder sonstige Methoden zur Nachstabilisierung anschließen.

Selbstverständlich können die verschiedenen möglichen, in der Regel räumlich getrennt erfolgenden, Zuläufe unmittelbar vor Eintritt in das Polymerisationsgefäß miteinander vermischt werden.

Bei der erfindungsgemäßen radikalischen wäßrigen Emulsionspolymerisation werden in der Regel wäßrige Polymerisatenddispersionen erhalten, die eine sehr breite Teilchengrößenverteilung aufweist, die sich wie folgt charakterisieren läßt:

| | |
|---|---|
| 5 bis 25 | Gew.-% des Endpolymerisats ≤ 200 nm |
| 15 bis 40 | Gew.-% des Endpolymerisats ≤ 400 nm |
| 35 bis 75 | Gew.-% des Endpolymerisats ≤ 600 nm |

(fortgesetzt)

| | |
|---|---|
| 45 bis 90 | Gew.-% des Endpolymerisats ≤ 800 nm |
| 100 | Gew.-% des Endpolymerisats ≤ 1600 nm. |

Diese spezielle Teilchengrößenverteilung ist vermutlich für den reduzierten Fließwiderstand der erfindungsgemäß erhältlichen wäßrigen Polymerisatenddispersionen verantwortlich, die normalerweise Newton'sches Fließverhalten aufweisen. Die Teilchengrößenverteilung wurde mit der sogenannten Coupling-PSD-Technik in der analytischen Ultrazentrifuge bestimmt (siehe W. Mächtle, Angewandte Makromolekulare Chemie 162(1988) 35-42 (Nr. 2735)). Unterhalb einer Feststoffvolumenkonzentration von 50 Vol.-% nimmt der Einfluß der Teilchengrößenverteilung auf den Fließwiderstand zunehmend ab.

Die erfindungsgemäß erhältlichen wäßrigen Polymerisatenddispersionen werden wie beschrieben in der Regel mit voll befriedigender Reproduzierbarkeit und in Abwesenheit von Ausflockungen mit Feststoffvolumenkonzentrationen von bis zu 75 Vol.-% in großtechnisch einfach realisierbarer Weise erhalten. Besonders ausgeprägt entfalten die erfindungsgemäß erhältlichen wäßrigen Polymerisatenddispersionen ihre vorteilhaften Eigenschaften bei Feststoffvolumenkonzentrationen oberhalb von 65 Vol.-%, weshalb Verfahren zur Herstellung solcher Polymerisatenddispersionen bevorzugt sind. Sie eignen sich generell als Bindemittel sowie als Massen zur Herstellung von Beschichtungen und Verklebungen, wobei diesbezüglich in an sich bekannter Weise zusätzlich Hilfsstoffe wie Filmbildehilfsmittel, Füllstoffe oder Weichmacher zugesetzt werden können.

Beispiele

1) Herstellung wäßriger Dispersionen DA1 und DA2 eines Ausgangspolymerisats

DA1:

| | | |
|---|---|---|
| In ein Gemisch aus | 65,4 kg | Wasser, |
| | 25 kg | n-Butylacrylat und |
| | 22,25 kg | einer 45 gew.-%igen wäßrigen Lösung der Dowfax 2A1 entsprechenden grenzflächenaktiven Substanz |

wurde bei Raumtemperatur zunächst eine Lösung von 0,0625 kg Ascorbinsäure und 0,005 kg Eisen(II)-sulfat in 2 kg Wasser eingerührt und anschließend innerhalb von 3 Minuten ein Gemisch aus 2 kg Wasser und 0,65 kg einer 30 gew.-%igen wäßrigen Wasserstoffperoxidlösung zugegeben. Anschließend wurde die Temperatur während 1 h auf 52°C gehalten. Danach wurde auf Raumtemperatur abgekühlt und nach Zugabe einer Mischung von 0,05 kg Ascorbinsäure in 1 kg Wasser noch 2 h nachgerührt.

Die so erhältliche wäßrige Dispersion eines Ausgangspolymerisats wies einen Feststoffgehalt von 30,2 Gew.-%, einen gewichtsmittleren Teilchendurchmesser $\bar{d}_w$ von 32 nm und eine Teilchenkonzentration von $1{,}7 \cdot 10^{19}$ Teilchen/kg auf.

DA2:

| | | |
|---|---|---|
| Ein Gemisch aus | 1800 g | Wasser, |
| | 445 g | einer 45 gew.-%igen wäßrigen Lösung der Dowfax 2A1 entsprechen den grenzflächenaktiven Substanz, |
| | 10 g | einer 25 gew.-%igen wäßrigen Ammoniaklösung |
| | 495 g | n-Butylacrylat und |
| | 5 g | Acrylsäure |

wurde auf 80°C erhitzt und auf einmal mit 25 g Natriumperoxidsulfat versetzt. Anschließend wurde die Temperatur 1 h bei 80°C gehalten und dann auf 25°C abgekühlt.

Die so erhältliche wäßrige Dispersion eines Ausgangspolymerisats wies einen Feststoffgehalt von 26 Gew.-%, einen gewichtsmittleren Teilchendurchmesser $\bar{d}_w$ von 35 nm und eine Teilchenkonzentration von $1{,}1 \cdot 10^{13}$ Teilchen/kg auf.

2) Herstellung verschiedener erfindungsgemäßer wäßriger Polymerisatenddispersion DE1 bis DE4

DE1: Ein in ein Polymerisationsgefäß vorgelegtes Gemisch aus

| | |
|---|---|
| 150 g | Wasser, |
| 22 g | einer 20 gew.-%igen wäßrigen Lösung der Dowfax 2A1 entsprechenden grenzflächenaktiven Substanz |
| und 11 g | wäßrige Dispersion DA1 aus 1) |

wurde unter Rühren auf 85°C erhitzt und anschließend innerhalb von 5 h unter Aufrechterhaltung der 85°C Zulauf II kontinuierlich zugeführt. Zeitgleich mit Zulauf II setzte die kontinuierliche Zufuhr des Zulauf I ein, die sich zeitlich wie folgt gestaltete:

| | |
|---|---|
| 4 | Gew.-% innerhalb von 40 min, |
| dann 8 | Gew.-% innerhalb von 40 min, |
| dann 88 | Gew.-% innerhalb von 200 min. |

80 Minuten nach Beginn von Zulauf II wurde begonnen, zusätzlich 549 g wäßrige Dispersion DA1 aus 1) kontinuierlich gemäß nachfolgendem Zeitschema zuzuführen:

| | |
|---|---|
| 33,4 | Gew.-% innerhalb von 80 min, |
| dann 66,6 | Gew.-% innerhalb von 120 min. |

| | | |
|---|---|---|
| Zulauf I: | | |
| | 1345,2 g | n-Butylacrylat |
| | 889,2 g | Methylmethacrylat |
| | 46,5 g | Methacrylsäure |
| Zulauf II: | | |
| | 160 g | Wasser |
| | 10 g | Natriumperoxidisulfat |

Nach Beendigung der Zufuhr des Zulaufs II wurde das Reaktionsgemisch noch eine weitere Stunde bei 85°C gehalten.

Es wurde eine im wesentlichen an Ausflockungen freie wäßrige Polymerisatenddispersion erhalten (2,93 Liter), die eine Feststoffvolumenkonzentration von 67,6 Vol.-% (75,4 Gew.-%), eine bei 23°C bei einem Geschwindigkeitsgefälle von 487 $s^{-1}$ gemäß DIN 53019 bestimmte dynamische Viskosität von 460 mPa·s sowie nachfolgende Teilchengrößenverteilung aufwies:

| | |
|---|---|
| 7 | Gew.-% ≤ 200 nm |
| 18 | Gew.-% ≤ 400 nm |
| 55 | Gew.-% ≤ 600 nm |
| 85 | Gew.-% ≤ 800 nm |
| 95 | Gew.-% ≤ 1000 nm |
| 100 | Gew.-% ≤ 1200 nm. |

DE2: Ein in ein Polymerisationsgefäß vorgelegtes Gemisch aus

| | |
|---|---|
| 160 g | Wasser, |
| 11,2 g | einer 20 gew.-%igen wäßrigen Lösung der Dowfax 2A1 entsprechenden grenzflächenaktiven Substanz |
| und 11 g | wäßrige Dispersion DA1 aus 1) |

wurde unter Rühren auf 85°C erhitzt und anschließend innerhalb von 5 h unter Aufrechterhaltung der 85°C Zulauf II kontinuierlich zugeführt. Zeitgleich mit Zulauf II setzte die kontinuierliche Zufuhr des Zulauf I ein, die sich zeitlich wie folgt gestaltete:

| | |
|---|---|
| 4 | Gew.-% innerhalb von 40 min, |
| dann 8 | Gew.-% innerhalb von 40 min, |
| dann 88 | Gew.-% innerhalb von 200 min. |

80 Minuten nach Beginn von Zulauf II wurde begonnen, zusätzlich 549 g wäßrige Dispersion DA1 aus 1) kontinuierlich gemäß nachfolgendem Zeitschema zuzuführen:

| | |
|---|---|
| 26 | Gew.-% innerhalb von 80 min, |
| dann 54 | Gew.-% innerhalb von 60 min, |
| dann 20 | Gew.-% innerhalb von 60 min. |

| | | |
|---|---|---|
| Zulauf I: | | |
| | 1915,2 g | n-Butylacrylat |
| | 114 g | Ethylacrylat |
| | 114 g | 2-Ethylhexylacrylat |
| | 114 g | Methylmethacrylat |
| | 22, 8 g | Acrylsäure |
| | 3,4 g | tert.-Dodecylmercaptan |
| Zulauf II: | | |
| | 160 g | Wasser |
| | 10 g | Natriumperoxidisulfat |

Nach Beendigung der Zufuhr des Zulaufs II wurde das Reaktionsgemisch noch eine weitere Stunde bei 85°C gehalten.

Es wurde eine im wesentlichen an Ausflockungen freie wäßrige Polymerisatenddispersion erhalten (3,04 Liter), die eine Feststoffvolumenkonzentration von 69,4 Vol.-% (75,3 Gew.-%), eine bei 23°C bei einem Geschwindigkeitsgefälle von 487 $s^{-1}$ gemäß DIN 53019 bestimmte dynamische Viskosität von 375 mPa·s sowie nachfolgende Teilchengrößenverteilung aufwies:

| | |
|---|---|
| 20 | Gew.-% ≤ 200 nm |
| 40 | Gew.-% ≤ 400 nm |
| 72 | Gew.-% ≤ 600 nm |
| 90 | Gew.-% ≤ 800 nm |
| 100 | Gew.-% ≤ 1000 nm. |

DE3: In ein Polymerisationsgefäß wurden 175 g Wasser vorgelegt und auf 85°C erhitzt. Anschließend wurden zeitgleich beginnend unter Aufrechterhaltung der 85°C nachfolgende Zuläufe zugegeben, deren Zufuhr sich zeitlich wie folgt gestaltet:

| | | |
|---|---|---|
| Zulauf I: | 2257,2 g | n-Butylacrylat |
| | 22,8 g | Acrylsäure |
| | 2 | Gew.-% in 20 min., |
| | dann 4 | Gew.-% in 20 min., |
| | dann 8 | Gew.-% in 20 min., |
| | dann 86 | Gew.-% in 180 min. |
| Zulauf II: | 667 g | wäßrige Dispersion DA2 aus 1) |
| | 5 | Gew.-% in 60 min., |
| | dann 10 | Gew.-% in 60 min., |
| | dann 85 | Gew.-% in 120 min. |
| Zulauf III: | 79,7 g | Wasser |
| | 6,0 g | Natriumperoxidsulfat |
| | 20 | Gew.-% in 5 min., |
| | dann 80 | Gew.-% in 115 min. |

Nach Beendigung der Zuläufe I und II wurde das Reaktionsgemisch noch eine weitere Stunde bei 85°C gehalten und anschließend abgekühlt.

Es wurde eine im wesentlichen an Ausflockungen freie wäßrige Polymerisatenddispersion erhalten (2,9 Liter), die eine Feststoffvolumenkonzentration von 69,5 Vol.-% (75,3 Gew.-%), eine bei 23°C bei einem Geschwindigkeitsgefälle von 487 $s^{-1}$ gemäß DIN 53019 bestimmte dynamische Viskosität von 430 mPa·s sowie nachfolgende Teilchengrößenverteilung aufwies:

| | |
|---|---|
| 16 | Gew.-% ≤ 200 nm |
| 30 | Gew.-% ≤ 400 nm |
| 35 | Gew.-% ≤ 600 nm |
| 45 | Gew.-% ≤ 800 nm |
| 60 | Gew.-% ≤ 1000 nm |
| 75 | Gew.-% ≤ 1200 nm |
| 90 | Gew.-% ≤ 1400 nm |
| 100 | Gew.-% ≤ 1600 nm. |

DE4: Wie DE3, die Zuläufe gestalteten sich zeitlich jedoch wie folgt:

| | | |
|---|---|---|
| Zulauf I: | 1 | Gew.-% in 20 min., |
| | dann 2 | Gew.-% in 20 min., |
| | dann 4 | Gew.-% in 20 min., |
| | dann 93 | Gew.-% in 300 min. |

| | | |
|---|---|---|
| Zulauf II: | 1 | Gew.-% in 5 min., |

(fortgesetzt)

| | | |
|---|---|---|
| | dann 99 | Gew.-% in 295 min. |
| Zulauf III: | 5 | Gew.-% in 60 min., |
| | dann 5 | Gew.-% in 60 min., |
| | dann 90 | Gew.-% in 240 min. |

Nach Beendigung der Zuläufe I und III wurde das Reaktionsgemisch noch eine weitere Stunde bei 85°C gehalten und danach abgekühlt.

Es wurde eine im wesentlichen an Ausflockungen freie wäßrige Polymerisatenddispersion erhalten (2,92 Liter), die eine Feststoffvolumenkonzentration von 70,3 Vol.-% (75,9 Gew.-%), eine bei 23°C bei einem Geschwindigkeitsgefälle von 487 $s^{-1}$ gemäß DIN 53109 bestimmte dynamische Viskosität von 510 mPa·s sowie nachfolgende Teilchengrößenverteilung aufwies:

| | |
|---|---|
| 23 | Gew.-% ≤ 200 nm |
| 35 | Gew.-% ≤ 400 nm |
| 65 | Gew.-% ≤ 600 nm |
| 90 | Gew.-% ≤ 800 nm |
| 95 | Gew.-% ≤ 1000 nm |
| 100 | Gew.-% ≤ 1200 nm |

**Patentansprüche**

1. Verfahren zur Herstellung einer wäßrigen Polymerisatenddispersion, die eine Festoffvolumenkonzentration von wenigstens 50 Vol.-% aufweist, dadurch gekennzeichnet, daß man wenigstens ein radikalisch polymerisierbares Monomeres unter Zusatz wenigstens einer wäßrigen Dispersion eines Ausgangspolymerisats in einem Polymerisationsgefäß nach dem Verfahren der radikalischen wäßrigen Emulsionspolymerisation in Gegenwart grenzflächenaktiver Substanzen und radikalischer Polymerisationsinitiatoren mit der Maßgabe polymerisiert, daß

   a) die Masse des wenigstens einen radikalisch polymerisierbaren Monomeren, bezogen auf die Gesamtmasse, gebildet aus der Masse des wenigstens einen radikalisch polymerisierbaren Monomeren und der in Form der wenigstens einen wäßrigen Dispersion zugesetzten Masse an Ausgangspolymerisat, 90 bis 99,5 % beträgt,

   b) das Ausgangspolymerisat in der wenigstens einen wäßrigen Dispersion in Form dispers verteilter Ausgangspolymerisatteilchen vorliegt, deren von Null verschiedener gewichtsmittlerer Teilchendurchmesser kleiner oder gleich 50 nm ist,

   c) die Anzahl, der in Form der wenigstens einen wäßrigen Dispersion eines Ausgangspolymerisats insgesamt zugesetzten, in der wenigstens einen wäßrigen Dispersion dispers verteilt vorliegenden Ausgangspolymerisatteilchen, bezogen auf das Volumen der Polymerisatenddispersion, $10^{15}$ bis $10^{20}$ Ausgangspolymerisatteilchen pro Liter beträgt,

   d) von der Gesamtmenge des wenigstens einen zu polymerisierenden Monomeren vor Beginn der radikalischen wäßrigen Emulsionspolymerisation entweder nichts oder höchstens bis zu 10 Gew.-% der Gesamtmenge ins Polymersationsgefäß vorgelegt werden,

   e) von der Gesamtmenge der wenigstens einen zuzusetzenden wäßrigen Dispersion eines Ausgangspolymerisats vor Beginn der radikalischen wäßrigen Emulsionspolymerisation entweder nichts oder höchstens soviel ins Polymerisationsgefäß vorgelegt wird, daß die Gesamtzahl der vorgelegten Ausgangspolymerisatteilchen nicht mehr als 10 % der insgesamt in Form der wenigstens einen wäßrigen Dispersion zuzusetzenden

Ausgangspolymerisatteilchen beträgt,

f) von der Gesamtmenge des wenigstens einen zu polymerisierenden Monomeren wenigstens 90 Gew.-% dem Polymerisationsgefäß nach Beginn der radikalischen wäßrigen Emulsionspolymerisation zugeführt werden, und zwar so, daß zu jedem Zeitpunkt dieser Zufuhr der Polymerisationsumsatz der bereits zuvor dem Polymerisationsgefäß zugeführten Monomeren einschließlich der ins Polymerisationsgefäß vorgelegten Monomeren, bezogen auf die Gesamtmenge gebildet aus den zuvor dem Polymerisationsgefäß zugeführten Monomeren und den ins Polymerisationsgefäß vorgelegten Monomeren, wenigstens 80 % beträgt,

g) von der Gesamtmenge der wenigstens einen zuzusetzenden wäßrigen Dispersion eines Ausgangspolymerisats dem Polymerisationsgefäß nach Beginn der radikalischen wäßrigen Emulsionspolymerisation wenigstens soviel zugeführt wird, daß die Gesamtzahl der in dieser zugeführten Menge der wenigstens einen zuzusetzenden wäßrigen Dispersion enthaltenen Ausgangspolymerisatteilchen wenigstens 90 % der insgesamt in Form der wenigstens einen wäßrigen Dispersion eines Ausgangspolymerisats zuzusetzenden Ausgangspolymerisatteilchen beträgt und daß diese Zufuhr so erfolgt, daß

- zu jedem Zeitpunkt dieser Zufuhr der Polymerisationsumsatz der bereits zuvor dem Polymerisationsgefäß zugeführten Monomeren einschließlich der ins Polymerisationsgefäß vorgelegten Mono-; meren, bezogen auf die Gesamtmenge gebildet aus den zuvor dem Polymerisationsgefäß zugeführten Monomeren und den ins Polymerisationsgefäß vorgelegten Monomeren, wenigstens 80 % beträgt;

- zu jedem Zeitpunkt nach Beginn der Emulsionspolymerisation das Verhältnis $V_e$ der Molzahl der dem Polymerisationsgefäß bereits zuvor zugeführten Menge des wenigstens einen Monomeren einschließlich des ins Polymerisationsgefäß vorgelegten Anteils des wenigstens einen Monomeren zu der Molzahl der dem Polymerisationsgefäß bereits zuvor in Form der wenigstens einen wäßrigen Dispersion eines Ausgangspolymerisats zugeführten Ausgangspolymerisatteilchen einschließlich des ins Polymerisationsgefäß vorgelegten Anteils der wenigstens einen wäßrigen Dispersion eines Ausgangspolymerisats, normiert auf das Verhältnis der Molzahl der insgesamt zu polymerisierenden Menge des wenigstens einen Monomeren zu der Molzahl der insgesamt in Form der wenigstens einen wäßrigen Dispersion eines Ausgangspolymerisats zuzusetzenden Ausgangspolymerisatteilchen, im Bereich von > 0 bis 10 liegt;

- zu jedem Zeitpunkt nach Beginn der Emulsionspolymerisation das Verhältnis $V_a$ der Molzahl der dem Polymerisationsgefäß bereits zuvor in Form der wenigstens einen wäßrigen Dispersion eines Ausgangspolymerisats zugeführten Ausgangspolymerisatteilchen ausschließlich des ins Polymerisationsgefäß vorgelegten Anteils der wenigstens einen wäßrigen Dispersion eines Ausgangspolymerisats zu der Molzahl der dem Polymerisationsgefäß bereits zuvor zugeführten Menge des wenigstens einen Monomeren ausschließlich des ins Polymerisationsgefäß vorgelegten Anteils des wenigstens einen Monomeren, normiert auf das Verhältnis der Molzahl der insgesamt in Form der wenigstens einen wäßrigen Dispersion eines Ausgangspolymerisats nach Beginn der wäßrigen Emulsionspolymerisation zuzuführenden Ausgangspolymerisatteilchen zu der Molzahl der insgesamt nach Beginn der wäßrigen Emulsionspolymerisation zuzuführenden Menge des wenigstens einen Monomeren, im Bereich von 0 bis 10 liegt;

- nach Beendigung der Zufuhr des wenigstens einen Monomeren noch höchstens 10 % der insgesamt in Form der wenigstens einen wäßrigen Dispersion eines Ausgangspolymerisats zuzusetzenden Ausgangspolymerisatteilchen dem Polymerisationsgefäß zugeführt werden;

- nach Beendigung der Zufuhr der wenigstens einen wäßrigen Dispersion eines Ausgangspolymerisats noch höchstens 30 Gew.-% der Gesamtmenge des wenigstens einen zu polymerisierenden Monomeren dem Polymerisationsgefäß zugeführt werden;

h) die wäßrige Polymerisatenddispersion, bezogen auf die Gesamtmasse gebildet aus der Masse des wenigstens einen radikalisch polymerisierbaren Monomeren und der in Form der wenigstens einen wäßrigen Dispersion zuzusetzenden Masse an Ausgangspolymerisat, 1 bis 5 % grenzflächenaktive Substanzen enthält,

i) von der Gesamtmenge der insgesamt in der Polymerisatenddispersion enthaltenen Menge an grenzflächenaktiven Substanzen vor Beginn der radikalischen wäßrigen Emulsionspolymerisation höchstens 15 Gew.-% ins Polymerisationsgefäß vorgelegt werden (Teilmenge A),

j) von der Gesamtmenge der insgesamt in der Polymerisatenddispersion enthaltenen Menge an grenzflächenaktiven Substanzen wenigstens 50 Gew.-% bereits Bestandteil der wenigstens einen zuzusetzenden wäßrigen Dispersion eines Ausgangspolymerisats sind (Teilmenge B),

k) der Anteil der Gesamtmenge der insgesamt in der Polymerisatenddispersion enthaltenen Menge an grenzflächenaktiven Substanzen, der weder Bestandteil der Teilmenge A noch Bestandteil der Teilmenge B ist (die Teilmenge C), nach Beginn der radikalischen wäßrigen Emulsionspolymerisation dem Polymerisationsgefäß so zugeführt wird, daß zu jedem Zeitpunkt die Gesamtmenge, gebildet aus den bereits im Polymerisationsgefäß befindlichen Anteilen der Teilmengen C und B, bezogen auf die im Polymerisationsgefäß befindliche Gesamtmenge an Monomeren und Polymerisat weniger als 5 Gew.-% beträgt und

l) die insgesamt eingesetzte Menge an radikalischen Polymerisationsinitiatoren, bezogen auf die Gesamtmenge des wenigstens einen zu polymerisierenden Monomeren, 0,1 bis 5 Gew.-% beträgt und im Verlauf der radikalischen wäßrigen Emulsionspolymerisation dem Polymerisationsgefäß so zugegeben wird, daß sich die radikalische wäßrige Emulsionspolymerisation bis zu einem Mindestpolymerisationsumsatz der Gesamtmenge des wenigstens einen zu polymerisierenden Monomeren von wenigstens 90 % fortsetzt.

## Claims

**1.** A process for preparing a final aqueous polymer dispersion having a solids volume concentration of at least 50% by volume, which comprises polymerizing at least one free-radically polymerizable monomer with the addition of at least one aqueous dispersion of a starting polymer in a polymerization vessel by the method of free radical aqueous emulsion polymerization in the presence of surface active substances and free radical polymerization initiators with the proviso that a) the mass of the at least one free-radically polymerizable monomer relative to the total mass formed of the mass of the at least one free-radically polymerizable monomer and the mass of starting polymer added in the form of the at least one aqueous dispersion is from 90 to 99.5%,

b) the starting polymer is present in the at least one aqueous dispersion in the form of dispersed starting polymer particles whose non-zero weight average particle diameter is equal to or less than 50 nm,
c) the total number of starting polymer particles added dispersed in the form of at least one aqueous dispersion of a starting polymer is from 1015 to $10^{20}$ starting polymer particles per liter based on the volume of the final polymer dispersion,
d) of the total amount of the at least one monomer to be polymerized either nil or at most 10% by weight is introduced into the polymerization vessel as initial charge prior to the start of the free radical aqueous emulsion polymerization,
e) of the total amount of the at least one aqueous dispersion of a starting polymer to be added the amount introduced into the polymerization vessel as initial charge prior to the start of the free radical aqueous emulsion polymerization is either nil or at most such that the total number of starting polymer particles introduced as initial charge is not more than 10% of the total starting polymer particles to be added in the form of the at least one aqueous dispersion,
f) of the total amount of the at least one monomer to be polymerized at least 90% by weight is added to the polymerization vessel after the start of the free radical aqueous emulsion polymerization, in such a way that at any time of this addition the polymerization conversion of the monomers already added previously to the polymerization vessel including the monomers introduced into the polymerization vessel as initial charge is at least 80%, based on the total amount formed of the monomers added previously to the polymerization vessel and the monomers introduced into the polymerization vessel as initial charge,
g) of the total amount of the at least one aqueous dispersion of a starting polymer to be added the proportion added to the polymerization vessel after the start of the free radical aqueous emulsion polymerization is at least such that the total number of the starting polymer particles contained in this added amount of the at least one aqueous dispersion to be added is at least 90% of the starting polymer particles to be added in total in the form of the at least one aqueous dispersion of a starting polymer and that this addition is carried out in such a way that

- at any time of this addition the polymerization conversion of the monomers already added previously to the polymerization vessel including the monomers introduced into the polymerization vessel as initial charge is at least 80%, based on the total amount formed of the monomers added previously to the polymerization vessel and the monomers introduced into the polymerization vessel as initial charge;

- at any time after the start of the emulsion polymerization the ratio $V_e$ of the number of moles of the amount already added previously to the polymerization vessel of the at least one monomer including the proportion of the at least one monomer introduced into the polymerization vessel as initial charge to the number of moles of starting polymer particles already added previously to the polymerization vessel in the form of the at least one aqueous dispersion of a starting polymer, standardized for the ratio of the number of moles of the total amount of the at least one monomer to be polymerized to the number of moles of the starting polymer particles to be added in total in the form of the at least one aqueous dispersion of the starting polymer, is within the range from > 0 to 10;
- at any time after the start of the emulsion polymerization the ratio $V_a$ of the number of moles of the starting polymer particles already added previously to the polymerization vessel in the form of the at least one aqueous dispersion of a starting polymer excluding the proportion of the at least one aqueous dispersion of a starting polymer introduced into the polymerization vessel as initial charge to the number of moles of the amount of the at least one monomer already added previously to the polymerization vessel excluding the proportion of the at least one monomer introduced into the polymerization vessel as initial charge, standardized for the ratio of the number of moles of the starting polymer particles to be added in total in the form of the at least one aqueous dispersion of a starting polymer to the number of moles of the amount of the at least one monomer to be added in total after the start of the aqueous emulsion polymerization, is within the range from 0 to 10;
- on completion of the addition of the at least one monomer at most 10% of the starting polymer particles to be added in total in the form of the at least one aqueous dispersion of a starting polymer are added to the polymerization vessel;
- on completion of the addition of the at least one aqueous dispersion of a starting polymer at most 30% by weight of the total amount of the at least one monomer to be polymerized is added to the polymerization vessel;

h) the final aqueous polymer dispersion contains from 1 to 5% of surface active substances, based on the total mass formed of the mass of the at least one free-radically polymerizable monomer and the mass of starting polymer to be added in the form of the at least one aqueous dispersion,
i) of the total amount of surface active substances contained in the final polymer dispersion at most 15% by weight is introduced into the polymerization vessel as initial charge prior to the start of the free radical aqueous emulsion polymerization (aliquot A),
j) of the total amount of surface active substances contained in the final polymer dispersion at least 50% by weight are already part of the at least one aqueous dispersion to be added of a starting polymer (aliquot B),
k) the proportion of the total amount of surface active substances contained in total in the final polymer dispersion that is neither part of aliquot A nor part of aliquot B (namely aliquot C) is added to the polymerization vessel after the start of the free radical aqueous emulsion polymerization in such a way that at any time the total amount formed of the proportions of aliquots C and B already present in the polymerization vessel is less than 5% by weight, based on the total amount of monomers and polymer present in the polymerization vessel, and
l) the total amount used of free radical polymerization initiators is 0.1 to 5% by weight, based on the total amount of the at least one monomer to be polymerized, and is added to the polymerization vessel in the course of the free radical aqueous emulsion polymerization in such a way that the free radical aqueous emulsion polymerization continues to a minimum polymerization conversion of at least 90% of the total amount of the at least one monomer to be polymerized.

**Revendications**

1. Procédé de préparation d'une dispersion finale aqueuse de polymère, qui présente une concentration volumique en solides d'au moins 50% en volume, caractérisé en ce que l'on polymérise au moins un monomère polymérisable par voie radicalaire, sous addition d'au moins une dispersion aqueuse d'un polymère de départ, dans un récipient de polymérisation, selon le procédé de la polymérisation en émulsion aqueuse radicalaire et en présence de substances tensioactives et d'amorceurs de polymérisation radicalaires avec pour conditions que

   a) la masse d'au moins un monomère polymérisable par voie radicalaire, par rapport à la masse totale formée par la masse de l'au moins un monomère polymérisable par voie radicalaire et de la masse de polymère de départ ajoutée sous forme de l'au moins une dispersion aqueuse, varie de 90 à 99,5%,
   b) le polymère de départ dans l'au moins une dispersion aqueuse se présente sous forme de particules de

polymère de départ réparties, de façon dispersée, dont le diamètre moyen en poids différent de zéro est égal ou inférieur à 50 nm,

c) le nombre des particules du polymère de départ ajoutées au total, sous la forme de l'au moins une dispersion aqueuse d'un polymère de départ, présentes en répartition dispersée dans l'au moins une dispersion aqueuse, par rapport au volume de la dispersion finale du polymère, varie de $10^{15}$ à $10^{20}$ particules de polymère de départ par litre,

d) de la quantité totale de l'au moins un monomère à polymériser, on introduise au préalable dans le récipient de polymérisation, avant le début de la polymérisation en émulsion aqueuse radicalaire, rien ou au plus jusqu'à 10% en poids de la quantité totale,

e) de la quantité totale de l'au moins une dispersion aqueuse d'un polymère de départ à ajouter, on introduise dans le récipient de polymérisation, avant le début de la polymérisation en émulsion aqueuse radicalaire, rien ou au plus autant que le nombre total de particules de polymère de départ introduites au préalable ne dépasse pas plus de 10% des particules du polymère de départ à ajouter au total, sous forme de l'au moins une dispersion aqueuse,

f) de la quantité totale de l'au moins un monomère à polymériser, on introduise au moins 90% en poids dans le récipient de polymérisation, après le début de la polymérisation en émulsion aqueuse radicalaire et, cela, de façon que, à chaque moment de cette introduction, le taux de polymérisation des monomères déjà précédemment introduits dans le récipient de polymérisation, y compris des monomères introduits au préalable dans le récipient de polymérisation, par rapport à la quantité totale formée des monomères précédemment introduits dans le récipient de polymérisation et des monomères introduits au préalable dans le récipient de polymérisation, atteigne au moins 80%,

g) de la quantité totale de l'au moins une dispersion aqueuse d'un polymère de départ à ajouter, on introduise dans le récipient de polymérisation, après le début de la polymérisation en émulsion aqueuse radicalaire, au moins une proportion telle que le nombre total des particules de polymère de départ contenues dans cette quantité introduite de l'au moins une dispersion aqueuse à ajouter, atteigne au moins 90% des particules du polymère de départ à ajouter au total, sous la forme de l'au moins une dispersion aqueuse du polymère de départ et que cette introduction s'effectue en une manière telle que

- à chaque moment de cette introduction, le taux de polymérisation des monomères déjà précédemment introduits dans le récipient de polymérisation, y compris les monomères introduits au préalable dans le récipient de polymérisation, par rapport à la quantité totale formée des monomères précédemment introduits dans le récipient de polymérisation et des monomères introduits au préalable dans le récipient de polymérisation, atteigne au moins 80%,
- à chaque moment après le début de la polymérisation en émulsion, le rapport $V_e$ du nombre de moles de la quantité de l'au moins un monomère déjà précédemment introduite dans le récipient de polymérisation, y compris la fraction de l'au moins un monomère introduite au préalable dans le récipient de polymérisation, par rapport au nombre de moles de particules de polymère de départ déjà précédemment introduites dans le récipient de polymérisation, sous forme de l'au moins une dispersion aqueuse d'un polymère de départ, y compris de la fraction de l'au moins une dispersion aqueuse d'un polymère de départ introduite au préalable dans le récipient de polymérisation, normalisé sur le rapport du nombre de moles de la quantité totale à polymériser de l'au moins un monomère, au nombre de moles des particules du polymère de départ à ajouter au total, sous la forme de l'au moins une dispersion aqueuse d'un polymère de départ, fluctue de > 0 à 10,
- à chaque moment après le début de la polymérisation en émulsion, le rapport $V_a$ du nombre de moles des particules du polymère de départ déjà précédemment introduites dans le récipient de polymérisation, sous la forme de l'au moins une dispersion aqueuse d'un polymère de départ, à l'exclusion de la fraction de l'au moins une dispersion aqueuse d'un polymère introduite au préalable dans le récipient de polymérisation, au nombre de moles de la quantité de l'au moins un monomère déjà précédemment introduite dans le récipient de polymérisation, à l'exclusion de la fraction de l'au moins un monomère introduite au préalable dans le récipient de polymérisation, normalisé sur le rapport du nombre de moles des particules du polymère de départ à introduire au total, sous la forme de l'au moins une dispersion aqueuse d'un polymère de départ, après le début de la polymérisation en émulsion aqueuse, au nombre de moles de la quantité de l'au moins un monomères à introduire au total, après le début de la polymérisation en émulsion aqueuse, varie de 0 à 10,
- après l'achèvement de l'introduction de l'au moins un monomère, on introduise encore dans le récipient de polymérisation, au maximum 10% des particules du polymère de départ à ajouter au total, sous la forme de l'au moins une dispersion aqueuse d'un polymère de départ,
- après l'achèvement de l'introduction de l'au moins une dispersion aqueuse d'un polymère de départ, on

introduise encore dans le récipient de polymérisation, au maximum 30% de la quantité totale de l'au moins un monomère à polymériser,

h) la dispersion aqueuse finale de polymère contienne, par rapport à la masse totale formée par la masse de l'au moins un monomère polymérisable par voie radicalaire et de la masse de polymère de départ à ajouter, sous la forme de l'au moins une dispersion aqueuse, 1 à 5% de substances tensioactives,
i) de la quantité totale de la quantité de substances tensioactives contenue au total dans la dispersion finale de polymère, avant le début de la polymérisation en émulsion aqueuse radicalaire, on introduise au préalable, au maximum 15% en poids dans le récipient de polymérisation (quantité partielle A),
j) de la quantité totale de la quantité de substances tensioactives contenue au total dans la dispersion finale de polymère, au moins 50% en poids sont déjà partie constituante de l'au moins une dispersion aqueuse d'un polymère de départ à ajouter (quantité partielle B),
k) la fraction de la quantité totale de la quantité de substances tensioactives contenue au total dans la dispersion finale de polymère, qui ne constitue ni la partie constituante de la quantité partielle A, ni la partie constituante de la quantité partielle B (la quantité partielle C), soit introduite dans le récipient de polymérisation, après le début de la polymérisation en émulsion aqueuse radicalaire, en une manière telle que, à chaque moment, la quantité totale formée par les fractions des quantités partielles C et B se trouvant déjà dans le récipient de polymérisation, par rapport à la quantité totale de monomères et de polymère, qui se trouve dans le récipient de polymérisation, soit inférieure à 5% en poids et
l) la quantité d'amorceurs de polymérisation radicalaires mise en oeuvre au total, par rapport à la quantité totale de l'au moins un monomère à polymériser, varie de 0,1 à 5% en poids et soit introduite dans le récipient de polymérisation, au cours du déroulement de la polymérisation en émulsion aqueuse radicalaire, en une manière telle que la polymérisation en émulsion aqueuse radicalaire progresse, jusqu'à un taux de conversion par polymérisation minimal de la quantité totale de l'au moins un monomère à polymériser, d'au moins 90%.